# EUROPÄISCHE PATENTSCHRIFT

(11) **EP 1 021 061 B1**
(45) Veröffentlichungstag und Bekanntmachung des Hinweises auf die Patenterteilung: **19.03.2008**
(21) Anmeldenummer: 99123383.4
(22) Anmeldetag: 24.11.1999
(51) Int. Cl.: H04S 1/00

(54) **Verfahren und Empfänger zum Unterdrücken von Störungen beim Funkempfang von Mehrkanal-Audiosendungen**
Method and receiver for noise suppression in radio receiver of multichannel audio signals
Procédé et récepteur pour la suppression du bruit dans un recepteur radio de signaux multicanaux

(30) Priorität: 12.01.1999 DE 19900818
(43) Veröffentlichungstag der Anmeldung: 19.07.2000
(73) Patentinhaber: ROBERT BOSCH GMBH, 70442 Stuttgart (DE)
(72) Erfinder: Kottschlag, Gerhard, 31139 Hildesheim (DE)

(56) Entgegenhaltungen:
- EP-A- 0 714 222
- US-A- 4 833 715

## Beschreibung

### Technisches Gebiet

Die Erfindung betrifft ein Verfahren zum Unterdrücken von Störungen beim Funkempfang von Mehrkanal-Audiosendungen, insbesondere von Zweikanal-Stereo-Audiosendungen, mit einem jeweiligen Nutzsignal pro Kanal, gemäß dem Oberbegriff des Anspruchs 1. Die Erfindung betrifft ferner Empfänger für Mehrkanal-Audiosendungen mit einem Mehrkanaldekoder, welcher mehrere Nutzsignale verschiedener Kanäle getrennt abgibt, gemäß dem Oberbegriff des Anspruchs 11.

### Stand der Technik

Funkempfänger für mehrkanalige Audiosignale, z.B. Stereosendungen, sollen bei unterschiedlichsten Signalpegeln, bei Pegelschwankungen des hochfrequenten Trägersignals und bei Funkstörungen das niederfrequente (Audio-) Ursprungssignal möglichst wirklichkeitsgetreu wiedergeben. Darunter versteht sich auch die räumliche Anordnung der verschiedenen wiedergegebenen Tonquellen. Diese räumliche Anordnung wird nachfolgend auch als Ortsinformation bezeichnet. Bei einer Mehrkanal-Audiosendung, insbesondere Zweikanal-Stereo-Audiosendung, ist dazu ein jeweiliges Nutzsignal pro Kanal vorgesehen, wobei für jedes von den Nutzsignalen übertragene Frequenzspektrum einer Signalquelle durch unterschiedliches zeitliches Auftreten und unterschiedliche Pegel in den unterschiedlichen Kanälen ein räumlicher Eindruck bzw. eine Ortsinformation für die entsprechende Signalquelle erzeugt wird. Bei einigen Empfangssituationen verschlechtert sich die Audioqualität eines Mehrkanalsignals, z.B. bei niedrigen Nutzsignalpegeln und bei Schwund bzw. Mehrwegeempfang. Um in diesen Situationen eine akzeptable Klangqualität weiterhin bereitstellen zu können, wird zur Abhilfe in herkömmlichen Empfängern die Kanaltrennung reduziert, bis hin zum Einkanal-(Mono- )Betrieb. Dies erweckt beim Hörer den Eindruck, alle zuvor im Raum verteilten Signalquellen werden an einem Punkt zusammengerückt. Eine solche Veränderung des ursprünglichen Signals wird bisher als am wenigsten störende Maßnahme bei schwierigen Empfangssituationen akzeptiert.

Die oben beschriebene Strategie ist dann besonders erfolgversprechend, wenn das gewonnene Einkanalsignal aufgrund des verwendeten Modulationsverfahrens eine geringere Anfälligkeit gegenüber den genannten Störeinflüssen aufweist. Dies ist insbesondere beim weit verbreiteten frequenzmodulierten UKW-Rundfunk (Multiplexsignal nach dem Pilottonverfahren) der Fall. Hierbei wird die Monoinformation in den niederfrequenten, systembedingt weniger beeinträchtigten Anteilen des Nutzsignals übertragen.

Weiterhin sind Verfahren bekannt, um ein Monosignal so zu bearbeiten, dass der Eindruck einer räumlichen Verteilung der Signalquellen entsteht. Dazu wird das Monosignal in mehrere Frequenzbereiche zerlegt, diese Bereiche werden unterschiedlich stark und/oder mit unterschiedlicher Verzögerung auf verschiedene Audio-Signalpfade verteilt (+ Hall oder andere bekannte Maßnahmen zur Erzeugung eines künstlichen Raumklang-Ef fekts). Je aufwendiger diese Bearbeitung erfolgt, desto mehr und engere Frequenzsegmente können unterschieden werden. Immer weitergehende Aufspaltungen führen dabei letztlich zu kontinuierlichen Funktionen für Dämpfung-über-Frequenz und Verzögerung-über-Frequenz, jeweils eine eigene Funktion für jeden Signalpfad. Bei diskreten Frequenzbereichen kann deren Breite unterschiedlich groß gewählt werden, angepasst an die Stereoempfindlichkeit des menschlichen Ohrs bei verschiedenen Frequenzen (z.B. keine Kanaltrennung bei Bässen, enge Segmente bei ca. 1kHz, große Segmente bei hohen Frequenzen).

Herkömmliche Stereodekoder sind verhältnismäßig einfach und damit preiswert aufgebaut. Das bisher bei Stereoempfängern mit derartigen Stereodekodem verwendete Verfahren mit Mono-Stereo-Blend basiert, wie zuvor bereits erläutert, einzig auf der Steuerung der Kanaltrennung . Bei auftretenden Störungen wird sehr früh auf Einkanalbetrieb unter Verlust des Raumeindrucks umgeblendet.

US 4,833,715 offenbart einen Empfänger für Mehrkanal-Audiosendungen mit einem Mehrkanaldekoder und ein Verfahren zum Unterdrücken von Störungen bein Funkempfang.

### Darstellung der Erfindung, Aufgabe, Lösung, Vorteile

Es ist Aufgabe der vorliegenden Erfindung, ein verbessertes Verfahren und einen verbesserten Empfänger der obengenannten Art zur Verfügung zu stellen, welche die obengenannten Nachteile deutlich reduzieren und eine verbesserte Störungsreduktion erzielen.

Diese Aufgabe wird durch ein Verfahren der o.g. Art mit den in Anspruch 1 gekennzeichneten Merkmalen und durch einen Empfänger der o.g. Art mit den in Anspruch 11 gekennzeichneten Merkmalen gelöst.

Dazu ist es bei einem Verfahren der o.g. Art erfindungsgemäß vorgesehen, dass während des Empfangs der Mehrkanal-Audiosendung in Zeitabschnitten, in denen der Empfang weitgehend ungestört ist, spektrale Verteilungen der Nutzsignale der verschiedenen Kanäle und/oder Laufzeitunterschiede bzw. Zeitdifferenzen von jeweils zwei oder mehr verschiedenen Spektralanteilen im jeweiligen Nutzsignal verschiedener Kanäle miteinander verglichen werden. Zu Beginn der Empfangsstörung werden die zuletzt ermittelten Vergleichsergebnissse dazu verwendet, für jeden Kanal für wenigstens zwei oder mehr verschiedene Spektralanteile Parameter für eine Signaldämpfung und/oder eine Signalverzögerung festzulegen. Für die Dauer der Empfangsstörung werden die entsprechenden Spektralanteile aus einem die Nutzsignale aller Kanäle enthaltenden Einkanalsignal gemäß den bestimmten Parameter verzögert und/oder gedämpft auf der Kanalzahl der Mehrkanal-Audiosendung entsprechende Kanäle derart verteilt, dass für einen Zuhörer für die entsprechenden Spektralanteile ein räumlicher Klangeindruck erzeugt wird, welcher im Wesentlichen einem räumlichen Klangeindruck der direkt wiedergegebenen Audiosignale der Kanäle entspricht.

Dies hat den Vorteil, dass während einer Empfangsstörung nicht auf Einkanalbetrieb geschaltet werden muss und somit nicht der Eindruck entsteht, die Signalquellen würden in der Raummitte zusammenfallen. Die Verfälschung durch den signalabhängig geformten künstlichen Raumklang erscheint dem Hörer weniger störend, als eine Verfälschung durch Mono-betrieb. Kurze Störungen werden vom Hörer gar nicht mehr wahrgenommen. Man kann mit kürzeren Zeitkonstanten bzw. -verzögerungen zum Mehrkanalbetrieb zurückkehren, da einer Pulsiereffekt (bei periodischen Störungen scheint die Signalquelle schnell zwischen verschiedenen Orten zu springen) nicht oder in deutlich geringerem Maß auftritt.

Vorzugsweise Weitergestaltungen des Verfahrens sind in den Ansprüchen 2 bis 10 beschrieben.

Ein unerwünschter Eindruck eines schnellen Ortswechsels einer im Audiosignal wiedergegebenen Signalquelle, wenn die Frequenzen dieser Signalquelle eine Bereichsgrenze zwischen benachbarten Spektralanteilen überschreiten, ist dadurch vermieden, dass die Parameter zur Dämpfung und/oder Verzögerung als stetige Funktion des Pegels/Laufzeitunterschieds in Abhängigkeit von der Frequenz bestimmt werden.

Für eine digitale Signalverarbeitung ist es besonders geeignet, wenn der Spektralbereich in mehrere vorbestimmte Spektralanteile aufgeteilt wird, wobei Frequenzen eines Spektralanteiles bei der Bestimmung der Parameter unterschiedlich gewichtet berücksichtigt werden. Hierbei wird der störende Eindruck einer räumlich springenden Signalquelle zuverlässig dadurch vermieden, dass sich die vorbestimmten Spektralanteile in der Frequenz teilweise überlappen und die Frequenzen eines Spektralanteiles im Überlappungsbereich zu einem benachbarten Spektralanteil geringer gewichtet werden.. Zweckmäßigerweise wird die Aufteilung der Spektralanteile in Abhängigkeit von der Analyse der Nutzsignale dynamisch verändert.

Um zu verhindern, dass kurzzeitige Ereignisse im Nutzsignal einen Raumklang unangemessen stark beeinflussen, werden einmal bestimmte Parameter über die Zeit mittels einer Gewichtungsfunktion ergänzt. Hierbei erfolgt beispielsweise als Gewichtungsfunktion eine Mittelung über vorbestimmte Zeiträume oder eine Zusammenfassung eines vorbestimmten Zeitraumes unter stärkerer Berücksichtigung jüngerer bestimmter Parameter.

Um Rauschanteile im Nutzsignal von der Gestaltung eines künstlichen Raumklanges fern zu halten, werden bei der Bestimmung der Parameter nur solche Spektralanteile berücksichtigt, die einen vorbestimmten Pegel-Schwellwert oder eine frequenzabhängige Schwellwertfunktion überschreiten. Die innerhalb eines Spektralanteiles bzw. Frequenzbereiches vorhandenen Signalkomponenten beeinträchtigen dadurch eine Ortsbestimmung durch den Vergleich der Nutzsignale verschiedener Kanäle des dominanten Signals nicht mehr.

Eine gute Prognose über einen zukünftigen räumlichen Ort einer Signalquelle wird dadurch erzielt, dass für solche Spektralanteile, in denen eine Bestimmung der Parameter nicht möglich ist, diese aus benachbarten Spektralanteilen interpoliert, zuvor bestimmte Parameter ggf. gewichtet weiter verwendet, vorbestimmte Parameter oder Parameterfunktionen verwendet und/oder Zufallsparameter verwendet werden.

Um eine vor der Empfangsstörung vorhandene Bewegung einer Signalquelle im Raum fortzuführen, werden mehrere Zeitpunkte und/oder Zeitbereiche analysiert und ein Trend miterfasst, ob ein bestimmter Spektralanteil in verschiedenen Kanälen über die Zeit unterschiedlich stark ansteigt oder absinkt bzw. ob sich eine Zeitdifferenz bzw. ein Laufzeitunterschied eines bestimmten Spektralanteiles zwischen den Kanälen erhöht oder erniedrigt, wobei der erfasste Trend in Zeiten von Empfangsstörungen in den bestimmten Parametern fortgeschrieben wird. Somit wird die beim Beginn einer Störung vorliegende Verteilung der Signalquellen im Raum nicht eingefroren, sondern die Bewegung von Quellen scheinbar fortgeführt. Daher wird bei der Rückkehr zum Mehrkanalbetrieb der Unterschied zwischen der dann vorliegenden Verteilung und der letzten Verteilung des künstlichen Raumklangs geringer ausfallen. Die Umschaltung bzw. -blendung zum Mehrkanalbetrieb ist weniger deutlich wahrzunehmen.

Ferner ist ein Empfänger der o.g. Art erfindungsgemäß gekennzeichnet durch eine Analysebaugruppe, welche spektrale Verteilungen der Nutzsignale der verschiedenen Kanäle und/oder Laufzeitunterschiede bzw. Laufzeitdifferenzen von jeweils zwei oder mehr verschiedenen Spektralanteilen im jeweiligen Nutzsignal der verschiedenen Kanäle miteinander vergleicht, aus dem Vergleich für jeden Kanal für wenigstens zwei oder mehr verschiedene Spektralanteile Parameter für eine Signaldämpfung und/oder eine Signalverzögerung derart bestimmt, und eine Raumklangbaugruppe , welche die entsprechenden Spektralanteile aus einem die Nutzsignale aller Kanäle enthaltenden Einkanalsignal gemäß den bestimmten Parameter verzögert und/oder gedämpft auf der Kanalzahl der Mehrkanal-Audiosendung entsprechende Kanäle derart verteilt, dass ein Zuhörer für die entsprechenden Spektralanteile einen räumlichen Klangeindruck erhält, welcher im Wesentlichen einem räumlichen Klangeindruck der direkt wiedergegebenen Audiosignale der Kanäle entspricht.

Mit diesem Empfänger werden die bereits zuvor genannten Vorteile des erfindungsgemäßen Verfahrens erzielt.

Vorzugsweise Weitergestaltungen des Empfängers sind in den Ansprüchen 12 bis 16 beschrieben.

In einer bevorzugten Ausführungsform erhält die Analysebaugruppe ihre Eingangssignale für jeden Kanal von Filterbaugruppen, welche das jeweilige Nutzsignal in mehrere Spektralanteile zerlegen. Die Analysebaugruppe weist für jeden auszuwertenden Spektralanteil einen Pegeldetektor sowie eine der Anzahl dieser Spektralanteile entsprechende Anzahl von Pegelvergleichern auf, wobei jeder Pegelvergleicher die Pegel eines zugeordneten Spektralanteils in mehreren, gegebenenfalls allen Kanälen vergleicht. Jedem Pegelvergleicher ist eine Signalumformerstufe nachgeschaltet, welche aus dem Resultat des Vergleichs im Pegelvergleicher für jeden Kanal des künstlichen Raumklanges den Parameter für Signaldämpfung und/oder den Parameter für die Signalverzögerung bestimmt, diese Werte für die Dauer der Empfangsstörung speichert und der Raumklangbaugruppe zur Verfügung stellt. Die Raumklangbaugruppe erhält ihre Eingangssignale aus einer Filterbaugruppe, welche ein die Nutzsignale aller Kanäle enthaltendes Mono-Signal in mehrere, insbesondere fünf, Spektralanteile zerlegt, wobei für mindestens einen Spektralanteil eine der Anzahl der zu verarbeitenden Kanäle entsprechende Anzahl von Abschwächerbaugruppen und/oder Verzögerungsstufen vorgesehen ist, wobei Abschwächerbaugruppen und/oder Verzögerungsstufen ein gemäß den für diesen Kanal und diesen Spektralanteil von der Analysebaugruppe bereitgestellten Parametern verzögertes und/oder gedämpftes Ausgangssignal erzeugen. Für jeden Kanal des künstlichen Raumklangs vereinigt je ein Addierer die so gewonnenen spektralen Teilsignale.

### Kurze Beschreibung der Zeichnungen

Nachstehend wird die Erfindung anhand der beigefügten Zeichnungen näher erläutert. Diese zeigen in
- Fig. 1: ein schematisches Blockschaltbild einer bevorzugten Ausführungsform eines erfindungsgemäßen Empfängers,
- Fig. 2: ein schematisches Blockschaltbild einer bevorzugten Ausführungsform einer Analysebaugruppe des erfindungsgemäßen Empfängers von Fig. 1,
- Fig. 3: ein schematisches Blockschaltbild einer bevorzugten Ausführungsform einer Raumklangbaugruppe des erfindungsgemäßen Empfängers von Fig. 1,
- Fig. 4: ein schematisches Blockschaltbild einer weiteren Ausführungsform eines erfindungsgemäßen Empfängers und
- Fig. 5: verschiedene spektrale Gewichtungsfunktonen.

### Bester Weg zur Ausführung der Erfindung

Erfindungsgemäß werden während des Empfangs von Mehrkanalaussendungen Nutzsignale verschiedener Kanäle des Mehrkanal-Audiosignals hinsichtlich ihrer spektralen Verteilung analysiert. Durch Vergleich der Analysen verschiedener Kanäle wird ermittelt, welche Spektralkomponenten an welcher Stelle im Raum ihren Ursprung haben. Diese erfindungsgemäß ermittelten Daten zur Beschreibung des Ursprungssignals werden nachfolgend als "Ortsinformationen" bezeichnet. Während gestörter Empfangszeiten wird auf einen künstlichen Raumklang umgeschaltet bzw. umgeblendet, der anhand der zuletzt ermittelten Ortsinformationen des ungestörten Mehrkanalsignals gestaltet wird, also die Spektralanteile des Monosignals so auf die verschiedenen Kanäle verteilt, dass der Eindruck entsteht, die Spektralanteile hätten weiterhin ihren Ursprung am zuletzt ermittelten Ort. Nach dem Ende der Störung wird auf Mehrkanalbetrieb zurückgeschaltet bzw. -geblendet. Die Kenngrößen, wie z.B. Eckfrequenzen von Teilfrequenzbändern, und Steuersignale zur Gestaltung des künstlichen Raumklang werden nachfolgend als "Raumklang-Parameter" bezeichnet. Je nach technischer Realisierung können Raumklang-Parameter identisch sein mit den Ortsinformationen. Die Ortsinformationen und/oder Raumklang-Parameter umfassen Daten zu Einzelfrequenzen oder die Signalanteile in Frequenzbereichen zusammen. Die Erfassung der Ortsinformationen erfolgt zu bestimmten Zeitpunkten oder für bestimmte Zeitintervalle.

Die Ermittlung der Ortsinformationen des ungestörten Mehrkanalsignals und/oder die Raumklang-Parameter zur Gestaltung des Raumklangs werden beispielsweise als kontinuierliche Funktionen des Pegels in Abhängigkeit der Frequenz realisiert. Eine kontinuierliche Funktion des Pegels in Abhängigkeit von der Frequenz verhindert den Eindruck eines schnellen Ortswechsels einer Signalquelle, wenn die Frequenz der Quelle eine Bereichsgrenze überschreitet.

Die Frequenzen eines gemeinsam bearbeiteten Bereichs fließen optional mit unterschiedlicher Gewichtung in die Berechnungen ein (frequenzabhängige Bewertungsfunktion). Die Gewichtung kann bei den Ortsinformationen anders gewählt werden, als für die Raumklang-Parameter. Es werden Teile des Spektrums untersucht bzw. bearbeitet, die fest abgegrenzt sind oder sich teilweise überschneiden. Bei dieser für digitale Signalbearbeitung besser geeigneten Aufteilung in Frequenzbereiche werden benachbarte Frequenzen mit geringerer Gewichtung erfasst, so dass auch hier der störende Eindruck einer springenden Signalquelle zuverlässig vermieden wird.

Zusätzlich zur bzw. an Stelle der Analyse von Signalpegeln wird die Zeitdifferenz der Spektralanteile (Laufzeitunterschiede) in den verschiedenen Kanälen nach den oben beschriebenen Verfahren in die Ortsinformationen übernommen. Bei verschiedenen Nutzsignalen (z.B. rhythmusbetonter Popmusik) liefert die Zeitdifferenz zwischen den Kanälen eine zuverlässigere Aussage über den Ort der Signalentstehung und eignet sich daher besser als Ausgangsinformation für die Nachbildung des künstlichen Raumklangs.

Einmal erfasste Ortsinformationen werden alternativ nicht durch die nächste Messung ersetzt, sondern über eine Gewichtungsfunktion ergänzt, z.B. über längere Zeiträume gemittelt oder unter stärkerer Berücksichtigung der jüngeren Messungen zusammengefasst. Somit kann die Erfassung der Ortsinformationen auch kontinuierlich erfolgen. Mit einer Gewichtungsfunktion kann man verhindern, dass kurzzeitige Ereignisse im Nutzsignal den Raumklang unangemessen stark beeinflussen

Bei der Ermittlung der Ortsinformationen werden optional nur solche Spektralanteile berücksichtigt, die einen bestimmten Pegel-Schwellwert bzw. eine frequenzabhängige Schwellwertfunktion überschreiten. Rauschanteile im Nutzsignal werden damit von der Gestaltung des künstlichen Raumklangs ferngehalten. Die innerhalb eines Frequenzbereiches vorhandenen kleinen Signalkomponenten beeinträchtigen ferner nicht mehr die Ortsbestimmung des dominanten Signals.

Für Frequenzbereiche, deren Analyse keine ausreichende Information über den Ort des Signalursprungs liefert, werden die benötigten Ortsinformationen bzw. Raumklang-Parameter aus benachbarten Frequenzbereichen interpoliert, früher ermittelte Werte weiter verwendet (ggf. gewichtet), vordefinierte Werte oder Funktionen genutzt (z.B. diese Lücken als Mono behandelt, also auf alle Kanäle gleich verteilt) und/oder (ggf. teilweise) durch Zufallsparameter ersetzt. Die Weiterverwendung der zuletzt aus brauchbaren Signalanteilen ermittelten Parameter sowie die Interpolation aus benachbarten Frequenzbereichen ermöglichen eine oftmals gute Prognose über den zukünftigen Ort der Signalquelle.

Bei der Analyse mehrerer Zeitpunkte/-bereiche wird optional zusätzlich ein Trend miterfasst, ob ein Spektralanteil in verschiedenen Kanälen mit der Zeit unterschiedlich stark ansteigt oder absinkt bzw. wie sich die Zeitdifferenz (Laufzeitunterschied) zwischen den Kanälen entwickelt. Dieser Trend wird in den Zeiten von Empfangsstörungen und somit der Nutzung des künstlichen Raumklangs fortgeschrieben.

Die Aufteilung in Frequenzbereiche (z.B. Bereichsgrenzen), die Bewertungsfunktionen und/oder Schwellwertfunktionen sind beispielsweise variabel ausgelegt, insbesondere werden sie anhand der Analyse des Nutzsignals dynamisch verändert. Dieses Verfahren ermöglicht es, individuelle spektrale Schwerpunkte des Nutzsignals als Ganzes zu bearbeiten, es verhindert die Aufspaltung und räumliche Trennung solcher Bereiche. Darüber hinaus kann die Nutzsignalanalyse bei leisen Passagen kleinere Signalamplituden erfassen. Das Zeitverhalten kann besser an die Charakteristik der aktuellen Störsituation, z.B. Frequenz der Fading-Einbrüche angepasst werden. Bei Störungen im Einkanal-Nutzsignal, z.B. Rauschen, kann individuell reagiert werden, z.B. Reduzierung der Signalpegel und/oder der Kanaltrennung im Bereich hoher Frequenzen, damit die Rauschkomponenten nicht in dem gerade für die Höhenwiedergabe genutzten Kanal besonders stark hörbar werden.

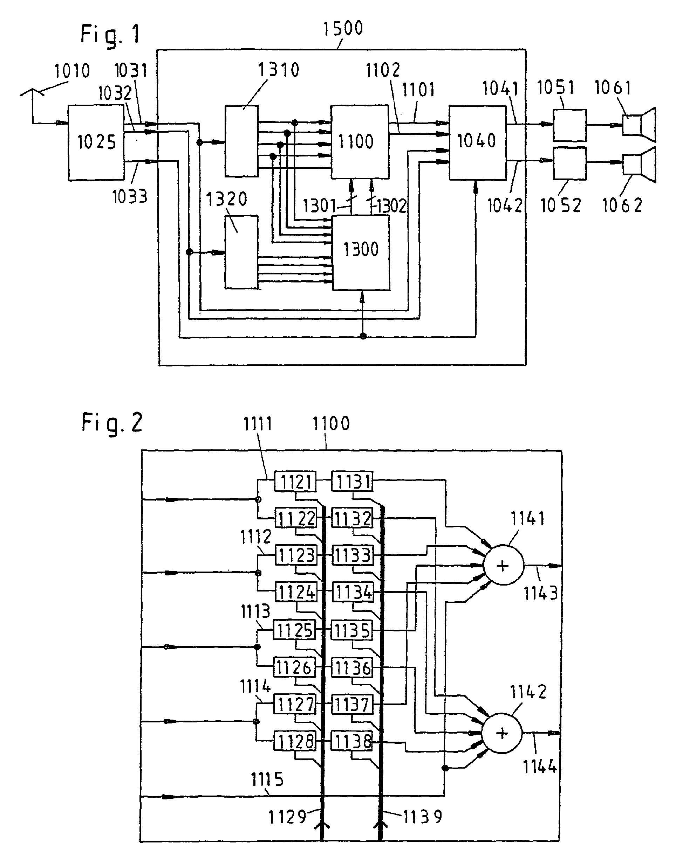

Figur 1 zeigt einen Ausschnitt aus einem Blockschaltbild eines FM-Stereo-Rundfunkempfängers als bevorzugtes Ausführungsbeispiel für einen erfindungsgemäßen Empfänger. Eine Antenne 1010 empfängt Hochfrequenzsignale von Rundfunkstationen und leitet sie an eine Selektions-und Demodulationsbaugruppe 1025 weiter. In dieser Baugruppe 1025 wird das Signal einer Funkstation erfasst und der Modulationsinhalt extrahiert. Neben der Stereo-Dekodierung führt diese Baugruppe eine Mono-Stereo-Umschaltung gemäß bekannter Verfahren zur Störunterdrückung durch. Ein Ausgangssignal 1031 dieser Baugruppe 1025 führt den linken Kanal L des Stereo-Signals, ein zweites Ausgangssignal 1032 enthält den rechten Kanal R. Ein dritter Ausgang 1033 dient als Stereoindikator, rechten Kanal R. Ein dritter Ausgang 1033 dient als Stereoindikator, er zeigt digital an, ob die Baugruppe das empfangene Signal derzeit in Stereo wiedergibt, oder sich aufgrund von Signalstörungen im Mono-Betrieb befindet und somit beide Audiosignal-Ausgänge 1031 und 1032 das Summensignal L+R führen.

Das Signal 1031 für den rechten Audiokanal wird einer ersten Filterbaugruppe 1310 zugeführt und dort in fünf spektrale Teilsignale 1311 bis 1315 zerlegt, wobei die höchsten Frequenzanteile über Signal 1311 abgegeben werden, die niederfrequentesten über Signal 1315. Diese Signale gelangen an Eingänge 1111 bis 1115 einer Raumklangbaugruppe 1100. Zusätzlich dienen die Signale 1311 bis 1314 auch als Eingangsgrößen für eine Analysebaugruppe 1300.

Das Signal 1032 für den linken Audiokanal wird einer zweiten Filterbaugruppe 1320 zugeführt und dort in vier spektrale Teilsignale 1321 bis 1324 zerlegt, wobei die höchsten Frequenzanteile über Signal 1321 abgegeben, die niederfrequentesten, vom menschlichen Gehör nicht lokalisierbaren Frequenzen, jedoch nicht berücksichtigt werden. Somit verfügt die Baugruppe 1321 nicht über einen äquivalenten Ausgang zum Signal 1315 der Baugruppe 1310. Die Signale 1321 bis 1324 gelangen an Eingänge der Analysebaugruppe 1300.

Die Baugruppe 1300 ist auch mit dem Signal 1033 verbunden. Die mittelten Raumparameter für Signaldämpfung und Signalverzögerung werden über mehrere Leitungen 1301 und 1302 an die Raumklangbaugruppe 1100 weitergegeben. Dort dienen sie als Raumklang-Parameter zur wirklichkeitsnahen Nachbildung des Raumklangs.

Über zwei Signale 1101 und 1102 gelangen zwei künstlich aus dem Einkanal-Signal 1021 erzeugte Signale Rs (rechts synthetisch) und Ls (links synthetisch) an eine Umschalteinheit 1040. Auch die Signale 1031 und 1032 werden zur Umschalteinheit 1040 geführt. Das Stereoindikator-Signal 1033 wird ebenfalls zur Umschalteinheit 1040 weiter geleitet. In Abhängigkeit dieses Signals 1033 wird bei schlechtem Empfang von den Signalen 1031 und 1032 auf die synthetischen Signale 1101 und 1102 umgeschaltet. Zwei Signale 1041 und 1042 führen die Ausgänge der Umschalteinheit 1040 über zwei Verstärker 1051 und 1052 zu zwei Lautsprechern 1061 und 1062. Die Baugruppen 1030, 1100, 1300, 1040 und 1050 sind beispielhaft in einem digitalen Signalprozessor (DSP) 1500 zusammengefasst, wobei die beschriebenen Funktionen insbesondere als Software ausgebildet sind.

Figur 2 zeigt ein Ausführungsbeispiel für die Raumklangbaugruppe 1100. Wenn die Demodulationsbaugruppe 1025 auf Monobetrieb geschaltet hat, wird das über die Signalleitung 1031 geführte Mono-Signal (L+R) in der Filterbaugruppe 1310 in fünf spektrale Teilsignale 1111 bis 1115 zerlegt, wobei die höchsten Frequenzanteile über Signal 1111 abgegeben werden, die niederfrequentesten über Signal 1115. Das Signal 1111 gelangt an eine erste Abschwächerbaugruppe 1121, durchläuft danach eine erste Verzögerungsstufe 1131 und gelangt auf einen ersten Summierpunkt bzw. Addierer 1141. Ein zweiter Pfad führt das Signal 1111 über eine zweite Abschwächerbaugruppe 1122 und eine zweite Verzögerungsstufe 1132 zu einem zweiten Summierpunkt bzw. Addierer 1142. Auch die Signale 1112, 1113 und 1114 werden jeweils über zwei Pfade durch die Abschwächer 1123 bis 1128 und Verzögerungsstufen 1133 bis 1138 zu den Summierpunkten bzw. Addierer 1141 und 1142 geführt. Ausgangsleitungen 1143 und 1144 der beiden Summierpunkte 1141, 1142 bilden die Ausgänge des Blocks 1100 und führen somit zu den Signalen 1101 und 1102. Die Signaldämpfung in den Abschwächern 1121 bis 1128 und die Durchlaufzeit der Verzögerungsstufen 1131 bis 1138 werden über Signalbusse 1129 und 1139 gesteuert, die aus jeweils acht Leitungen bestehen, je eine Leitung pro anzusteuernder Baugruppe. Da der Mensch nicht in der Lage ist, den Ursprungsort von tiefen bzw. niederfrequenten Tönen zu erkennen, ist in diesem Frequenzbereich eine Signalaufteilung nicht erforderlich. Das Signal 1115 wird daher direkt an die beiden Summierpunkte bzw. Addierer 1141 und 1142 geleitet.

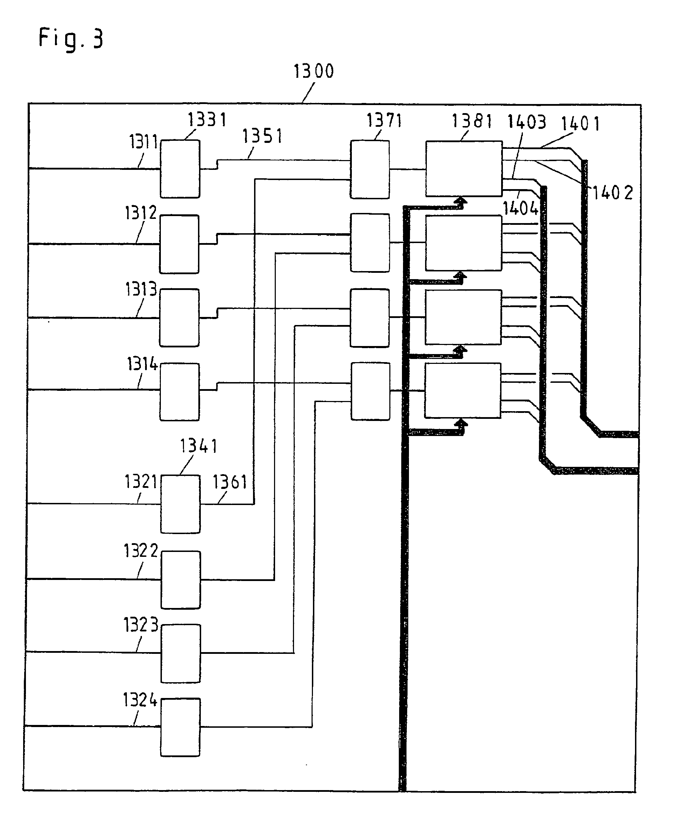

Figur 3 zeigt ein Ausführungsbeispiel für die Analysebaugruppe 1300. Während des Stereobetriebes der Demodulationsbaugruppe 1025 werden die von dort kommenden Signale 1031 und 1032 für den rechten und den linken Audiokanal in den zwei Filterbaugruppen 1310 und 1320 in vier spektrale Teilsignale 1311 bis 1314 und 1321 bis 1324 zerlegt, wobei die niedrigsten, vom menschlichen Gehör nicht lokalisierbaren Frequenzen in der Analysebaugruppe 1300 nicht berücksichtigt werden. Die Amplitude der Signalleitung 1311 mit den höchsten Frequenzanteilen des rechten Kanals wird mit einem Pegeldetektor 1331 ermittelt. Ein resultierendes Signal 1351 gelangt an einen Pegelvergleicher 1371. Hier wird es mit dem entsprechenden Pegel des linken Kanals verglichen, das über Signal 1321 und einen Detektor 1341 und Leitung 1361 ebenfalls an die Stufe 1371 gelangt ist. Eine Signalumformungsstufe 1381 erzeugt aus dem Resultat des Vergleichs vier Steuersignale 1401 bis 1404 zur Ansteuerung der Abschwächer 1123 bis 1128 und Verzögerungsstufen 1133 bis 1138 in der Raumklangbaugruppe 1100. Die Steuersignale verändern sich nur in den Zeiten des Stereo-Empfangs. Bei Umschaltung der Demodulationsbaugruppe 1025 in den Monobetrieb werden die zuletzt ermittelten Steuersignale in der Stufe 1381 gespeichert. Erst mit der Rückkehr zum Stereo-Betrieb beginnt wieder der Pegelvergleich 1300. Entsprechende Signale und Bearbeitungsstufen sind für die Signale der anderen drei Spektralanteile vorhanden.

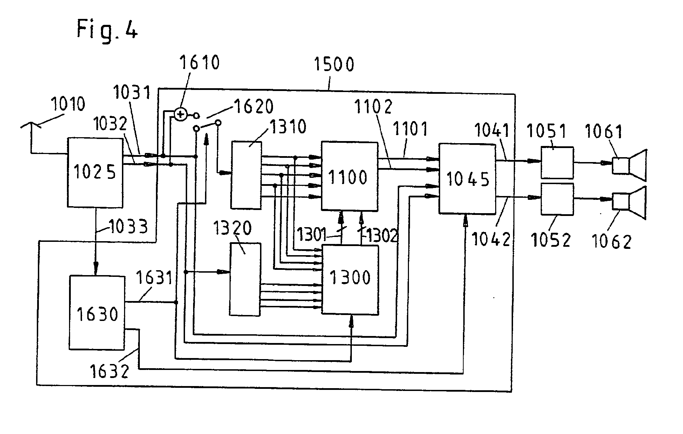

Die in Fig. 4 dargestellten Modifikationen des Ausführungsbeispiels ermöglichen es, anstelle der Umschaltung zwischen künstlichem Raumklang und der Wiedergabe der ursprünglichen Stereo-Signale eine Überblendung zwischen diesen Signalen vorzunehmen. Diese Überblendung wird vom Hörer weniger intensiv wahrgenommen und führt daher zu einer harmonischeren Klanggestaltung.

Das Signal 1033 ist nicht als Digitalsignal ausgebildet, sondern zeigt mittels einer analogen Größe (z.B. Spannung oder Stromstärke) an, in welchem Maß der Stereodekoder in der Baugruppe 1025 vom Stereobetrieb auf Mono umgeblendet hat. Ein zusätzliches Ausgangssignal der Baugruppe 1025 liefert permanent das Summensignal L+R beider Stereokanäle. Alternativ kann dieses Signal auch von einem zusätzlichen Addierer 1610 aus den Signalen 1031 und 1032 gebildet werden. Das Summensignal L+R gelangt auf einen Eingang eines Umschalters 1620, ein zweiter Eingang dieses Umschalters ist mit Signal 1031 verbunden. Der Ausgang des Umschalters wird als Eingangsgröße der Filterbaugruppe 1310 zugeführt. Die Filterbaugruppe 1310 ist somit nicht mehr direkt, sondern nur noch über den Umschalter mit Signal 1031 verbunden. Die Umschalteinheit 1040 wird durch eine Umblendbaugruppe 1045 ersetzt.

Eine zusätzliche Steuerungsbaugruppe 1630 wertet das Signal 1033 aus und erzeugt ein erstes Steuersignal 1631 für den Umschalter 1620 und die Analysebaugruppe 1300 sowie ein zweites Steuersignal 1632 für die Umblendeinheit 1045. Solange die Demodulationsbaugruppe 1025 Stereo-Signale zunächst mit voller Kanaltrennung abgibt, ist der Umschalter 1620 auf Signal 1031 geschaltet und die Analysebaugruppe 1300 führt permanent Pegelvergleiche durch. Über die Umblendeinheit gelangen die Stereo-Signale 1031 und 1032 an die Verstärker 1051 und 1052. Bei verringerter Kanaltrennung oder Mono-Betrieb wird mittels Signal 1631 der Umschalter 1620 auf das Signal L+R geschaltet, die Analysebaugruppe 1300 führt keine Vergleiche mehr durch, sondern speichert die zuletzt ermittelten Parameter. Die Umblendeinheit 1045 leitet in diesem Fall die Signale 1101 und 1102 an ihre Ausgänge 1041 und 1042 weiter. Erst nachdem die Demodulationsbaugruppe 1025 zur vollen Kanaltrennung zurückgekehrt ist, veranlasst die Steuerungsbaugruppe über das Signal 1632 eine langsame Umblendung durch die Baugruppe 1045. Eine geeignete Umblendcharakteristik, z.B. mit Zeitverzögerungen und/oder unterschiedlichen Umblendgeschwindigkeiten, ist durch die Auslegung bzw. Programmierung der Steuerungsbaugruppe festgelegt. Nachdem die Umblendung beendet wurde, schaltet die Steuerungsbaugruppe 1630 den Umschalter 1620 und die Analysebaugruppe 1300 zurück und aktiviert damit wieder den Pegelvergleich.

Weitere Modifikationen des Ausführungsbeispiels ermöglichen die Realisierung der Weiterbildungen des erfindungsgemäßen Verfahrens.

Zur Analyse der in unterschiedlichen Kanälen übertragenen Signale werden alternativ keine Filter 1310/1320 für einzelne Frequenzbereiche verwendet, sondern man ermittelt je Kanal eine Funktion des Pegels über der Frequenz, daraus eine Auflistung eines Parametersatzes mit Kennfrequenzen und dazugehörigen Pegelwerten. Die Frequenzen dazwischen kann man beispielsweise durch Interpolation erhalten. Für jeden künstlich zu erzeugenden Kanal wird an Stelle der Baugruppe 1100 beispielsweise ein analoges mehrstufiges Filter, beispielsweise aus Operationsverstärkern, derart gesteuert, dass es das zugeleitete Monosignal entsprechend dieser Funktionen/Parameter umformt.

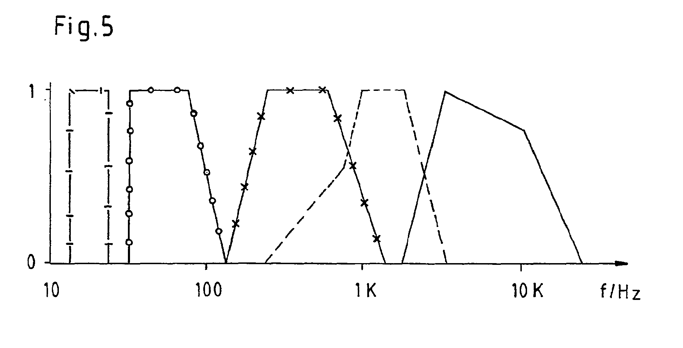

Bei der Filterung und Bestimmung der Parameter für Signaldämpfung und Signalverzögerung wird beispielsweise das Frequenzspektrum in verschiedene Teile aufgeteilt, welche gemäß der in Fig. 5 dargestellten verschiedenen Gewichtungsfunktionen gewichtet werden. Wie sich unmittelbar aus Fig. 5 ergibt, überschneiden sich einige Bereiche. Ferner werden in manchen Bereichen Frequenzen in den Randbereichen weniger stark gewichtet als Frequenzen in der Mitte solcher Bereiche.

Alternativ werden die Pegel in den Frequenzteilsegmenten über einen längeren Zeitraum gemessen und diese Verläufe beispielsweise in einem Ringpuffer gespeichert und einer Korrelationsstufe zugeführt. Diese Stufe ermittelt durch verschiedene zeitliche Verschiebungen und anschließenden Vergleich der Kanäle, für welche Zeitverschiebung eine ausgeprägte Übereinstimmung nachweisbar ist. Diese Zeitdifferenz wird als Information über den Ursprungsort des Signals verwendet. Der zuvor beschriebene einfache Pegelvergleich kann dabei weiterhin erfolgen, wobei eine nachfolgende Stufe entscheidet, welche der beiden Lokalisierungsstrategien in diesem Fall eine bessere Information (glaubwürdiger, ausgeprägter, konstanter oder anderes Kriterium) ergibt und weiterverarbeitet wird.

In einer bevorzugten Weiterbildung zur Mittelung und Gewichtung der gewonnenen Ortsinformation ist in der in Baugruppe 1371 und entsprechenden Baugruppen ein Tiefpass vorgesehen.

Die in den Stufen 1310 und 1320 erzeugten Frequenzbereiche (z.B. Signal 1311) werden alternativ in viel feinere Frequenzteilspektren aufgespalten. In der Analysebaugruppe 1300 werden alle Teilspektren mit geringen Signalpegeln verworfen, die restlichen Teile wieder zu Signalen addiert, die denen nach der ersten Frequenzaufteilung (also z.B. 1311) entsprechen.

Wenn eine Lücke im Orts-Signal auftritt, also für diesen Spektralteil in allen Kanälen vorübergehend kein ausreichender Pegel vorliegt, wird die im DSP digital berechnete Tiefpassfunktion für diese Messung angehalten. Bei einer Realisierung in digitaler Hardware werden beispielsweise die verschiedenen Messungen in ein Schieberegister geschrieben. Jede neue Messung erzeugt ein Taktsignal und schiebt bei der Übertragung die Älteste aus dem Register. Eine gewichtete Addition aller Registerkomponenten ergibt den Raumklang-Parameter. Für die Dauer einer Lücke im Orts-Signal wird der Takt zum Schieberegister unterbrochen. Alternativ werden zunächst alle Frequenzbereiche mit ausreichenden Informationen berechnet und danach die Lücken in anderen Frequenzbereichen linear aus den Nachbarbereichen interpoliert.

Die Pegel in den Frequenzteilsegmenten werden in einer alternativen Ausführungsform über einen längeren Zeitraum gemessen und diese Verläufe in einem Ringpuffer gespeichert. Zu Beginn einer Störung wird aus dieser Aufzeichnung des Pegelverlaufs ein Signalanstieg bzw. -abfall berechnet, der für die Dauer der Störung weiter in die Raumklang-Parameter eingearbeitet wird.

In einer Weiterführung der Erfindung werden die höchsten Spitzen im Frequenzspektrum ermittelt. Diese werden als Mittenfrequenzen der Filter 1110 zur Spektralaufteilung verwendet.

## Patentansprüche

1. Verfahren zum Unterdrücken von Störungen beim Funkempfang von Mehrkanal-Audiosendungen, insbesondere von Zweikanal-Stereo-Audiosendungen, mit einem jeweiligen Nutzsignal pro Kanal,
**dadurch gekennzeichnet, dass**
während des Empfangs der Mehrkanal-Audiosendung in Zeitabschnitten, in denen der Empfang weitgehend ungestört ist, spektrale Verteilungen der Nutzsignale der verschiedenen Kanäle und/oder Laufzeitunterschiede bzw. Zeitdifferenzen von jeweils zwei oder mehr verschiedenen Spektralanteilen im jeweiligen Nutzsignal verschiedener Kanäle miteinander verglichen werden, aus dem Vergleich für jeden Kanal für wenigstens zwei oder mehr verschiedene Spektralanteile Parameter für eine Signaldämpfung und/oder eine Signalverzögerung derart bestimmt und die entsprechenden Spektralanteile aus einem die Nutzsignale aller Kanäle enthaltenden Einkanalsignal gemäß den bestimmten Parameter verzögert und/oder gedämpft auf der Kanalzahl der Mehrkanal-Audiosendung entsprechende Kanäle derart verteilt werden, dass für einen Zuhörer für die entsprechenden Spektralanteile ein räumlicher Klangeindruck erzeugt wird, welcher im Wesentlichen einem räumlichen Klangeindruck der direkt wiedergegebenen Audiosignale der Kanäle entspricht.

2. Verfahren nach Anspruch 1,
**dadurch gekennzeichnet, dass**
die Parameter zur Dämpfung und/oder Verzögerung als stetige Funktion des Pegels und/oder Laufzeitunterschiedes in Abhängigkeit von der Frequenz bestimmt werden.

3. Verfahren nach Anspruch 1 oder 2,
**dadurch gekennzeichnet, dass**
der Spektralbereich in mehrere vorbestimmte Spektralanteile aufgeteilt wird, wobei verschiedene Frequenzen oder Frequenzbereiche eines Spektralanteiles bei der Bestimmung der Parameter unterschiedlich gewichtet berücksichtigt werden.

4. Verfahren nach Anspruch 3,
**dadurch gekennzeichnet, dass**
die Aufteilung der Spektralanteile in Abhängigkeit von der Analyse der Nutzsignale dynamisch verändert wird.

5. Verfahren nach Anspruch 3 oder 4,
**dadurch gekennzeichnet, dass**
sich die vorbestimmten Spektralanteile in der Frequenz teilweise überlappen und die Frequenzen eines Spektralanteiles im Überlappungsbereich zu einem benachbarten Spektralanteil geringer gewichtet werden.

6. Verfahren nach einem der vorhergehenden Ansprüche,
**dadurch gekennzeichnet, dass**
einmal bestimmte Parameter über die Zeit mittels einer Gewichtungsfunktion ergänzt werden.

7. Verfahren nach Anspruch 6,
**dadurch gekennzeichnet, dass**
als Gewichtungsfunktion eine Mittelung über vorbestimmte Zeiträume oder eine Zusammenfassung eines vorbestimmten Zeitraumes unter stärkerer Berücksichtigung jüngerer bestimmter Parameter erfolgt.

8. Verfahren nach einem der vorhergehenden Ansprüche,
**dadurch gekennzeichnet, dass**
bei der Bestimmung der Parameter nur solche Spektralanteile berücksichtigt werden, die einen vorbestimmten Pegel-Schwellwert oder eine frequenzabhängige Schwellwertfunktion überschreiten.

9. Verfahren nach einem der vorhergehenden Ansprüche,
**dadurch gekennzeichnet, dass**
für solche Spektralanteile, in denen eine Bestimmung der Parameter nicht möglich ist, diese aus benachbarten Spektralanteilen interpoliert, zuvor bestimmte Parameter ggf. gewichtet weiter verwendet, vorbestimmte Parameter oder Parameterfunktionen verwendet und/oder Zufallsparameter verwendet werden.

10. Verfahren nach einem der vorhergehenden Ansprüche,
**dadurch gekennzeichnet, dass**
mehrere Zeitpunkte und/oder Zeitbereiche analysiert werden und ein Trend miterfasst wird, ob ein bestimmter Spektralanteil in verschiedenen Kanälen über die Zeit unterschiedlich stark ansteigt oder absinkt bzw. ob sich eine Zeitdifferenz bzw. ein Laufzeitunterschied eines bestimmten Spektralanteiles zwischen den Kanälen erhöht oder erniedrigt, wobei der erfasste Trend in Zeiten von Empfangsstörungen in den bestimmten Parametern fortgeschrieben wird.

11. Empfänger (100) für Mehrkanal-Audiosendungen mit einem Mehrkanaldekoder, welcher mehrere Nutzsignale verschiedener Kanäle getrennt abgibt,
**gekennzeichnet durch**
eine Analysebaugruppe (1300), welche spektrale Verteilungen der Nutzsignale der verschiedenen Kanäle und/oder Laufzeitunterschiede bzw. Laufzeitdifferenzen von jeweils zwei oder mehr verschiedenen Spektralanteilen im jeweiligen Nutzsignal der verschiedenen Kanäle miteinander vergleicht, aus dem Vergleich für jeden Kanal für wenigstens zwei oder mehr verschiedene Spektralanteile Parameter für eine Signaldämpfung und/oder eine Signalverzögerung derart bestimmt, und
eine Raumklangbaugruppe (1100), welche die entsprechenden Spektralanteile aus einem die Nutzsignale aller Kanäle enthaltenden Einkanalsignal gemäß den bestimmten Parameter verzögert und/oder gedämpft auf der Kanalzahl der Mehrkanal-Audiosendung entsprechende Kanäle derart verteilt,
dass ein Zuhörer für die entsprechenden Spektralanteile einen räumlichen Klangeindruck erhält, welcher im Wesentlichen einem räumliche Klangeindruck der direkt wiedergegebenen Audiosignale der Kanäle entspricht.

12. Empfänger (100) nach Anspruch 11,
**dadurch gekennzeichnet, dass**
der Empfänger für jeden Kanal (1031, 1032) eine Filterbaugruppe (1310, 1320) aufweist, welche das jeweilige Nutzsignal in mehrere, insbesondere vier, Spektralanteile (1311 bis 1314, 1321 bis 1324) zerlegt.

13. Empfänger (100) nach Anspruch 12,
**dadurch gekennzeichnet, dass**
die Analysebaugruppe (1300) für jeden Spektralanteil einen Pegeldetektor (1331, 1341) aufweist.

14. Empfänger (100) nach Anspruch 12 oder 13,
**dadurch gekennzeichnet, dass**
die Analysebaugruppe (1300) eine der Anzahl der Spektralanteile entsprechende Anzahl von Pegelvergleichern (1371) aufweist, wobei ein Pegelvergleicher die Pegel eines zugeordneten Spektralanteils in mindestens zwei Kanälen vergleicht.

15. Empfänger (100) nach Anspruch 14,
**dadurch gekennzeichnet, dass**
jedem Pegelvergleicher (1371) eine Signalumformerstufe (1381) nachgeschaltet ist, welche aus dem Resultat des Vergleichs im Pegelvergleicher (1371) für jeden Kanal den Parameter für Signaldämpfung und/oder den Parameter für die Signalverzögerung bestimmt und/oder diese Parameter speichert.

16. Empfänger (100) nach Anspruch 14 oder 15,
**dadurch gekennzeichnet, dass**
eine Filterbaugruppe (1310) für die Dauer einer Empfangsstörung ein die Nutzsignale aller Kanäle enthaltendes Mono-Signal in mehrere, insbesondere fünf, Spektralanteile (1111 bis 1115) zerlegt, wobei für mindestens einen Spektralanteil eine der Anzahl der Kanäle entsprechende Anzahl von Abschwächerbaugruppen (1121 bis 1128) und/oder Verzögerungsstufen (1131 bis 1138) vorgesehen ist, wobei Abschwächerbaugruppen (1121 bis 1128) und/oder Verzögerungsstufen (1131 bis 1138) ein gemäß den für diesen Kanal und diesen Spektralanteil bestimmten Parametern für Signalverzögerung und/oder Signaldämpfung verzögertes und/oder gedämpftes Ausgangssignal erzeugt, wobei ein für jeden Kanal nachgeschalteter Addierer (1141, 1142) alle Ausgangssignale verschiedener Spektralanteile eines Kanals zusammen addiert.

## Claims

1. Method for rejecting interference in radio reception for multichannel audio transmissions, particularly for dual-channel stereo audio transmissions, with a respective useful signal per channel, **characterized in that**
during reception of the multichannel audio transmission in time periods in which reception is largely free of interference, spectral distributions of the useful signals from the various channels and/or propagation-time differences or time differences for two or more respective different spectral components in the respective useful signal from various channels are compared with one another, the comparison for each channel is used to determine, for at least two or more different spectral components, parameters for signal attenuation and/or signal delay in such a way, and the relevant spectral components from a single-channel signal containing the useful signals from all channels are distributed over channels corresponding to the number of channels in the multichannel audio transmission, with a delay and/or attenuation based on the determined parameters, in such a way that a three-dimensional sound for the relevant spectral components is produced for a listener which essentially corresponds to a three-dimensional sound for the directly reproduced audio signals from the channels.

2. Method according to Claim 1,
**characterized in that**
the parameters for attenuation and/or delay are determined as a constant function of the level and/or propagation-time difference on the basis of frequency.

3. Method according to Claim 1 or 2,
**characterized in that**
the spectral range is split into a plurality of predetermined spectral components, with various frequencies or frequency ranges of a spectral component being used in different weightings for determining the parameters.

4. Method according to Claim 3,
**characterized in that**
the split of the spectral components is altered dynamically on the basis of the analysis of the useful signals.

5. Method according to Claim 3 or 4,
**characterized in that**
the predetermined spectral components partially overlap in frequency, and frequencies of a spectral component in the overlap range for an adjacent spectral component are given a lower weighting.

6. Method according to one of the preceding claims,
**characterized in that**
parameters which have been determined are complemented over time using a weighting function.

7. Method according to Claim 6,
**characterized in that**
the weighting function effected is averaging over predetermined time periods or summarization of a predetermined time period with greater use of more recent determined parameters.

8. Method according to one of the preceding claims,
**characterized in that**
the parameters are determined using only spectral components which exceed a predetermined level threshold value or a frequency-dependent threshold value function.

9. Method according to one of the preceding claims,
**characterized in that**
for spectral components in which it is not possible to determine the parameters they are interpolated from adjacent spectral components, previously determined parameters continue to be used, possibly in weighted form, predetermined parameters or parameter functions are used and/or random parameters are used.

10. Method according to one of the preceding claims,
**characterized in that**
a plurality of times and/or time ranges are analysed and a trend is concurrently detected regarding whether a particular spectral component rises or falls to different degrees in various channels over time or whether a time difference or a propagation-time difference for a particular spectral component is increased or reduced between the channels, with the detected trend being updated in the determined parameters in times of reception interference.

11. Receiver (100) for multichannel audio transmissions having a multichannel decoder which outputs a plurality of useful signals from various channels separately,
**characterized by**
an analysis assembly (1300) which compares spectral distributions of the useful signals from the various channels and/or propagation-time differences for two or more respective different spectral components in the respective useful signal from the various channels with one another, and uses the comparison for each channel to determine, for at least two or more different spectral components, parameters for signal attenuation and/or signal delay in such a way, and
a surround sound assembly (1100) which distributes the relevant spectral components from a single-channel signal containing the useful signals from all channels, with a delay and/or attenuation based on the determined parameters, over channels corresponding to the number of channels in the multichannel audio transmission in such a way
that a listener obtains three-dimensional sound for the relevant spectral components which essentially corresponds to a three-dimensional sound for the directly reproduced audio signals from the channels.

12. Receiver (100) according to Claim 11,
**characterized in that**
the receiver has, for each channel (1031, 1032), a filter assembly (1310, 1320) which breaks down the respective useful signal into a plurality of, particularly four, spectral components (1311 to 1314, 1321 to 1324).

13. Receiver (100) according to Claim 12,
**characterized in that**
the analysis assembly (1300) has a level detector (1331, 1341) for each spectral component.

14. Receiver (100) according to Claim 12 or 13,
**characterized in that**
the analysis assembly (1300) has a number of level comparators (1371) which corresponds to the number of spectral components, a level comparator comparing the levels of an associated spectral component in at least two channels.

15. Receiver (100) according to Claim 14,
**characterized in that**
each level comparator (1371) has a signal shaper stage (1381) connected downstream of it which takes the result of the comparison in the level comparator (1371) and determines, for each channel, the parameter for signal attenuation and/or the parameter for the signal delay and/or stores these parameters.

16. Receiver (100) according to Claim 14 or 15,
**characterized in that**
a filter assembly (1310) breaks down a mono signal which contains the useful signals from all channels into a plurality of, particularly five, spectral components (1111 to 1115) for the duration of reception interference, with a number of attenuator assemblies (1121 to 1128) and/or delay stages (1131 to 1138) which corresponds to the number of channels being provided for at least one spectral component, with attenuator assemblies (1121 to 1128) and/or delay stages (1131 to 1138) producing an output signal which is delayed and/or attenuated for signal delay and/or signal attenuation on the basis of the parameters determined for this channel and for this spectral component, and with an adder (1141, 1142) which is connected downstream for each channel adding together all output signals for various spectral components from a channel.

## Revendications

1. Procédé de suppression des parasites dans la réception radio pour des émissions audio à canal multiples, notamment des émissions audio stéréo à deux canaux avec un signal utile respectif par canal,
**caractérisé en ce que**
pendant la réception de l'émission audio multicanaux, dans des segments de temps dans lesquels la réception est pratiquement non perturbée, on compare la distributions spectrale des signaux utiles des différents canaux et/ou des différences de temps de parcours ou des différences de temps de chaque fois deux ou plusieurs composantes spectrales différentes dans le signal utile respectif des différents canaux, et à partir de la comparaison, pour chaque canal pour au moins deux ou plusieurs composantes spectrales différentes on détermine des paramètres pour un amortissement de signal ou une temporisation de signal de façon que les composantes spectrales correspondantes d'un signal monocanal contenant les signaux utiles de tous les canaux, soient retardées et/ou amorties selon les paramètres déterminés pour être réparties entre un nombre de canaux correspondant au nombre de canaux de l'émission audio multicanaux de façon à générer pour un auditeur, une impression de son spatial pour les composantes spectrales correspondantes, impression qui correspond pour l'essentiel à l'impression du son dans l'espace pour les signaux audio des canaux directement reproduits.

2. Procédé selon la revendication 1,
**caractérisé en ce qu'**
on détermine les paramètres d'amortissement et/ou de temporisation comme fonction continue du niveau et/ou de la différence de temps de parcours en fonction de la fréquence.

3. Procédé selon la revendication 1 ou 2,
**caractérisé en ce qu'**
on répartit la plage spectrale en plusieurs composantes spectrales prédéfinies et on tient compte en pondérant différemment diverses fréquences ou plages de fréquences d'une composante spectrale pour la détermination des paramètres.

4. Procédé selon la revendication 3,
**caractérisé en ce qu'**
on modifie de manière dynamique la répartition des composantes spectrales en fonction de l'analyse des signaux utiles.

5. Procédé selon les revendications 3 ou 4,
**caractérisé en ce que**
les différentes composantes spectrales prédéfinies se chevauchent en partie par les fréquences et on pondère les fréquences d'une composante spectrale dans une plage de chevauchement, de façon moindre que pour la composante spectrale voisine.

6. Procédé selon l'une des revendications précédentes,
**caractérisé en ce qu'**
on complète un paramètre déterminé en fonction du temps à l'aide d'une fonction de pondération.

7. Procédé selon la revendication 6,
**caractérisé en ce que**
comme fonction de pondération, on fait une moyenne dans un espace temps prédéfini ou une réunion d'un espace temps prédéfini en tenant compte plus fortement des paramètres définis le plus récemment.

8. Procédé selon l'une des revendications précédentes,
**caractérisé en ce que**
pour déterminer les paramètres, on ne tient compte que des composantes spectrales qui dépassent un seuil de niveau prédéfini ou une fonction de seuil dépendant de la fréquence.

9. Procédé selon l'une des revendications précédentes,
**caractérisé en ce que**
pour les composantes spectrales pour lesquelles il n'est pas possible de déterminer les paramètres, on interpole les composantes à partir de composantes spectrales voisines, on continue le cas échéant de pondérer des paramètres déterminés au préalable, on utilise des paramètres définis ou des fonctions de paramètres et/ou on utilise des paramètres aléatoires.

10. Procédé selon l'une des revendications précédentes,
**caractérisé en ce qu'**
on analyse plusieurs instants et/ou plages de temps et on saisit une tendance pour savoir si une certaine composante spectrale augmente avec une intensité différente en fonction du temps dans différents canaux, ou si elle diminue ou si une différence de temps ou une différence de temps de parcours d'une certaine composante spectrale entre les canaux, augmente ou diminue,
la tendance saisie étant transférée comme des temps de perturbations de réception dans les paramètres prédéfinis.

11. Récepteur (100) pour des émissions audio multicanaux comportant un décodeur multi-canal qui indique séparément plusieurs signaux utiles de différents canaux,
**caractérisé par**
un composant d'analyse (1300) qui compare les distributions spectrales des signaux utiles des différents canaux et/ou des différents de temps de parcours ou des différents de temps de parcours de chaque fois deux ou plusieurs composantes spectrales différentes dans le signal utile respectif des différents canaux et à partir de la comparaison, pour chaque canal pour au moins deux ou plusieurs composantes spectrales différentes, on détermine les paramètres pour un amortissement de signal et/ou un retard de signal et
un composant de son spatial (1100) qui distribue les composantes spectrales correspondantes à partir d'un signal d'entrée contenant les signaux utiles de tous les canaux, les retarde et/ou les amortit selon des paramètres prédéfinis pour les répartir suivant un nombre de canaux correspondant au nombre de canaux de l'émission audio à canaux multiples,
un auditeur reçoit pour les composantes spectrales correspondantes, une impression sonore spatiale qui correspond pour l'essentiel à une impression sonore spatiale des signaux audio directement reproduits des canaux.

12. Récepteur (100) selon la revendication 11,
**caractérisé en ce que**
pour chaque canal (1031, 1032), le récepteur a un groupe de filtres (1310, 1320) qui décompose le signal utile respectif en plusieurs composantes spectrales, notamment quatre composantes spectrales (1311-1314, 1321-1324).

13. Récepteur (100) selon la revendication 12,
**caractérisé en ce que**
le composant d'analyse (1300) a un détecteur de niveau (1331, 1341) pour chaque composante spectrale.

14. Récepteur (100) selon les revendications 12 ou 13,
**caractérisé en ce que**
le composant d'analyse (1300) comporte un nombre de composantes spectrales correspondant au nombre de comparateurs de niveau (1371) et un comparateur de niveau compare les niveaux d'une composante spectrale associée dans au moins deux canaux.

15. Récepteur (100) selon la revendication 14,
**caractérisé en ce que**
chaque comparateur de niveau (1371) est suivi d'un étage de mise en forme de signal (1381) qui, à partir du résultat de la comparaison dans le comparateur de niveau (1371), pour chaque canal, détermine le paramètre d'amortissement de signal et/ou le paramètre de temporisation de signal et/ou mémorise ces paramètres.

16. Récepteur (100) selon les revendications 14 ou 15,
**caractérisé en ce qu'**
un composant de filtre (1310) décompose pour la durée d'une perturbation de réception, un signal monocanal contenant les signaux utiles de tous les canaux dans plusieurs composantes spectrales, notamment cinq composantes spectrales (1111-1115) et pour au moins une composante spectrale, il est prévu un nombre de groupes d'atténuation (1121-1128) et/ou de niveaux de temporisation (1131-1138) correspondant au nombre de canaux,
les groupes d'atténuation (1121-1128) et/ou les étages de temporisation (1131-1138) générant selon les paramètres définis pour ce canal ou cette composante spectrale, pour la temporisation de signal et/ou l'amortissement de signal, de façon retardée et/ou pour l'amortissement d'un signal de sortie et un additionneur (1141, 1142) en aval de chaque canal, additionne tous les signaux de sortie des différentes composantes spectrales d'un canal.
